# DEMANDE DE BREVET EUROPEEN

(11) **EP 3 035 694 A1**
(43) Date de publication de la demande: **22.06.2016**
(21) Numéro de dépôt: 15198716.1
(22) Date de dépôt: 09.12.2015
(51) Int. Cl.: H04N 21/422, H04N 21/433

(54) **PROCEDE DE CONTROLE DE LA RESTITUTION D'UN FLUX MEDIA LORS D'UN APPEL TELEPHONIQUE**

(30) Priorité: 17.12.2014 FR 1462633
(71) Demandeur: Orange, 75015 Paris (FR)
(72) Inventeur: AUGUI, Jérôme, 92190 MEUDON (FR); MIT, Frédéric, 75018 PARIS (FR)

(57) **Abrégé**

La présente invention concerne un procédé de contrôle de la restitution par un module décodeur TV d'un flux média sur au moins un dispositif connecté au décodeur TV, mis en oeuvre par des moyens informatiques incluant une passerelle domestique connectée au décodeur TV et comprenant un module de contrôle téléphonique, lequel module de contrôle téléphonique contrôlant au moins un combiné téléphonique, dans lequel la passerelle domestique, en situation de réception d'un appel téléphonique par le module de contrôle téléphonique, détermine une proximité entre le combiné téléphonique et un dispositif connecté au décodeur TV, et, en cas de proximité, envoie un premier message au décodeur TV, le premier message comprenant une instruction d'enregistrement du flux media restitué.

## Description

### DOMAINE TECHNIQUE AUQUEL SE RAPPORTE L'INVENTION

La présente invention concerne de manière générale le domaine des équipements audiovisuels. L'invention concerne plus particulièrement un procédé de contrôle de la restitution par un module de type décodeur TV d'un flux média sur au moins un dispositif connecté au décodeur TV.

### ARRIERE-PLAN TECHNOLOGIQUE

Les installations d'équipements audiovisuelles domestiques, typiquement les équipements électroniques installés chez les particuliers tels les téléviseurs (TV) ou équipements Hi-Fi sont aujourd'hui de plus en plus connectés, que ce soit au réseau Internet ou entre eux. Nous sommes passés d'une époque où un téléviseur installé chez un particulier était connecté à une seule prise d'antenne extérieure, et fonctionnait de manière totalement autonome, à une époque où le téléviseur est maintenant bien souvent connecté à un équipement intermédiaire tel un décodeur TV (encore appelé boitier décodeur, boitier adapteur ou *set-top box -* STB), généralement fourni par un fournisseur d'accès à Internet. Le téléviseur ne sert alors plus qu'à afficher un flux média provenant de cet équipement intermédiaire. Les flux media proviennent alors généralement d'une passerelle domestique (ou « box ») connectée à Internet.

L'interconnexion des différents équipements domestiques permet de proposer des services innovants aux utilisateurs et de leur faciliter la vie. Un exemple de tel service est donné dans la demande de brevet US 2008/0134278. Ce document décrit une solution dans laquelle la présence d'un téléphone mobile à côté d'un décodeur TV permet une interaction entre ces équipements, en particulier lorsque le décodeur TV diffuse un contenu sur un téléviseur. En effet, le décodeur TV, lorsqu'il détecte la présence du téléphone dans son environnement proche, et qu'un appel entrant est reçu sur ce téléphone, peut alors réagir en affichant l'information qu'un appel entrant est reçu directement sur te téléviseur auquel il est connecté. Si un utilisateur du système accepte l'appel entrant sur le téléphone, le décodeur TV peut alors mettre en pause le contenu diffusé. Le téléviseur est aussi utilisé pour restituer la voix de l'appelant pendant l'appel.

On le voit, des interactions sont possibles entre équipements connectés. Toutefois, le système précédemment décrit souffre de quelques défauts. Par exemple, la détection de proximité entre le téléphone et le décodeur TV peut nécessiter soit l'emploi d'une base dédiée pour le téléphone, soit la présence d'un module Bluetooth dans le téléphone. Il y a donc nécessité d'employer un nouveau matériel (la base) ou une technologie (Bluetooth) qui n'est généralement pas présente dans des téléphones dits « fixe ». De plus, le système décrit n'est pas adapté lorsqu'un utilisateur appelé regarde un contenu diffusé en compagnie d'autres personnes, ces autres personnes ne pouvant plus bénéficier du contenu diffusé si l'appel est pris.

### OBJET DE L'INVENTION

L'invention propose de remédier aux inconvénients précédemment discutés en proposant un procédé de contrôle de la restitution par un module décodeur TV d'un flux média sur au moins un dispositif connecté au décodeur TV, mis en oeuvre par des moyens informatiques incluant un équipement utilisateur connecté au décodeur TV et comprenant un module de contrôle téléphonique, lequel module de contrôle téléphonique contrôlant au moins un combiné téléphonique, dans lequel l'équipement utilisateur, en situation de réception d'un appel téléphonique par le module de contrôle téléphonique détermine une proximité entre le combiné téléphonique et un dispositif connecté au décodeur TV, et, en cas de proximité, envoie un premier message au décodeur TV, le premier message comprenant une instruction d'enregistrement du flux media restitué.

Ainsi, lorsque différents utilisateurs visionnent ou écoutent un flux média, et qu'un appel téléphonique est reçu alors que le combiné est à proximité du dispositif de restitution du flux médias, c'est-à-dire typiquement du téléviseur, le décodeur TV peut enregistrer le flux média pendant la durée de l'appel. Les utilisateurs auront donc la possibilité de reprendre la diffusion du flux média au moment correspondant à l'arrivée de l'appel, c'est-à-dire au début de la perturbation du visionnage ou de l'écoute. Ce procédé peut être mis en oeuvre par une passerelle domestique, ou box, qui peut possiblement être inclus dans un même équipement avec le décodeur TV. Ce procédé peut plus généralement être mis en oeuvre par un équipement utilisateur comme un équipement mobile ou une tablette, contrôlant un combiné téléphonique fixe.

Selon un mode de réalisation complémentaire de la présente invention, le premier message est envoyé sur prise de l'appel téléphonique par un utilisateur.

Avantageusement, l'enregistrement du flux média n'est déclenché que si l'appel est pris par un utilisateur. Cela évite de devoir déclencher un enregistrement du flux média à chaque arrivée d'un nouvel appel alors même que le nouvel appel sera rejeté ou ignoré. Pour un appel qui est ignoré ou rejeté, la perturbation est donc minimale, l'expérience utilisateur de visionnage ou d'écoute n'étant pas modifiée.

Selon un mode de réalisation complémentaire de la présente invention, le premier message comprend une instruction de contrôle du volume sonore du flux média restitué sur au moins un dispositif connecté.

Avantageusement, en même temps que l'enregistrement du flux média est déclenché, le volume sonore du flux média restitué est diminué afin de ne pas perturber la conversation téléphonique avec l'utilisateur appelé, tout en permettant aux autres utilisateurs de continuer à suivre le flux média pendant ce temps-là.

Selon un mode de réalisation complémentaire de la présente invention, la détermination de la proximité entre le combiné téléphonique et un dispositif connecté au décodeur TV comprend les étapes de réception d'un premier signal audio enregistré ou capté par un microphone du combiné téléphonique, réception d'un second signal audio, le second signal audio correspondant à un signal audio associé au flux media restitué sur au moins un dispositif et détermination d'une correspondance entre le premier et le second signal audio, la correspondance indiquant la proximité.

La solution permet donc l'utilisation du microphone du combiné téléphonique afin d'enregistrer le son ambiant autour du combiné, ce qui correspond au premier signal audio. Ce son ambiant est ensuite comparé avec le son correspondant au flux media. Dit autrement, s'il est possible d'entendre le son correspondant au flux média depuis le combiné téléphonique, on en déduit que le combiné est à proximité du dispositif de restitution, c'est-à-dire typiquement le téléviseur. Cette méthode offre donc une bonne garantie de détection fiable de la proximité au contraire des méthodes reposant sur la détection mutuelle d'équipement via des technologies radio comme le Bluetooth. En effet, ces méthodes peuvent conclure aisément à une proximité alors que le combiné et le dispositif de restitution sont dans des pièces différentes, les ondes radios traversant plus facilement les obstacles tels les murs. Cela permet aussi de ne déclencher le procédé décrit dans le présent document qu'à bon escient. Il est ainsi inutile d'utiliser ce procédé si le décodeur TV est allumé, réceptionnant un flux média, mais qu'un autre flux média, provenant d'une autre source, est diffusé sur le dispositif de restitution. C'est par exemple le cas si le décodeur TV est allumé mais que les utilisateurs regardent un DVD en utilisant un autre lecteur ou plus simplement la télévision en utilisant le récepteur interne au téléviseur.

Selon un mode de réalisation complémentaire de la présente invention, le premier ou second signal audio est un flux audio.

Avantageusement, le signal audio enregistré par le combiné est enregistré de façon continue et le flux audio correspondant est envoyé à la passerelle domestique. De même, avantageusement, le signal audio associé au flux media restitué sur au moins un dispositif est envoyé en continu au décodeur TV. L'une, l'autre, ou les deux possibilités peuvent être avantageusement utilisées. L'utilisation de flux audio continu peut permettre une détection permanente de la proximité.

Selon un mode de réalisation alternatif de la présente invention, la réception du second signal audio comprend les étapes suivantes d'envoi d'une requête au décodeur TV d'envoi d'un second signal audio, le second signal audio correspondant à un signal audio associé au flux media restitué sur au moins un dispositif et de réception en réponse à la requête d'au moins un deuxième message comprenant le second signal audio.

Avantageusement, la passerelle domestique demande au décodeur TV, par l'envoi d'une requête, de lui envoyer le signal audio correspondant au flux média diffusé. Ainsi, le décodeur TV peut fournir, à la demande, le signal audio correspondant au flux média diffusé et restitué par un dispositif, tel un téléviseur, ce qui permet à la passerelle d'utiliser ce signal audio pour la détermination de la proximité du téléviseur avec le combiné téléphonique.

Selon un mode de réalisation complémentaire de la présente invention, le procédé comprend de plus l'étape ultérieure, lorsque l'appel téléphonique prend fin, d'envoi d'un troisième message au décodeur TV, le troisième message comprenant une instruction de présentation d'une interface utilisateur prédéfinie sur un dispositif de restitution, l'interface utilisateur comprenant une première option, sélectionnable par un utilisateur, d'arrêt d'enregistrement du flux média et une deuxième option, sélectionnable par un utilisateur, de restitution du flux média enregistré, l'enregistrement du flux média continuant.

Avantageusement, lorsque l'appel prend fin, le choix est proposé à l'utilisateur, via une interface graphique affichée sur un dispositif de restitution connecté au décodeur TV, tel le téléviseur, entre poursuivre le visionnage ou l'écoute du flux diffusé en direct ou reprendre au moment de l'interruption par l'appel entrant, et ce grâce à l'enregistrement déclenché à ce même moment. Dit autrement, à la fin de l'appel l'utilisateur a le choix entre poursuivre le visionnage en direct sans interruption ou basculer dans un mode de visionnage en différé, avec reprise au moment de l'arrivée de l'appel téléphonique.

Selon un mode de réalisation complémentaire de la présente invention, le quatrième message comprend une instruction de contrôle du volume sonore du flux média restitué sur le dispositif connecté.

Avantageusement, lorsque l'appel téléphonique prend fin, le volume sonore du flux média restitué sur le dispositif connecté est remis à l'identique de ce qu'il était avant l'arrivée de l'appel téléphonique.

La présente invention a aussi pour objet une passerelle domestique connectée à un décodeur TV, le décodeur TV restituant un flux média sur au moins un dispositif qui lui est connecté, la passerelle domestique comprenant un module de contrôle téléphonique, lequel module de contrôle téléphonique contrôlant au moins un combiné téléphonique, laquelle passerelle domestique est adaptée pour déterminer une proximité entre le combiné téléphonique et un dispositif connecté au décodeur TV et contrôler la restitution et l'enregistrement du flux média par le décodeur TV en fonction de la proximité déterminée.

La présente invention a aussi pour objet un programme d'ordinateur pour la mise en oeuvre des étapes du procédé de contrôle de la restitution par un module décodeur TV d'un flux média sur au moins un dispositif connecté au décodeur TV, mis en oeuvre par des moyens informatiques incluant une passerelle domestique connectée au décodeur TV lorsque le programme est exécuté par au moins un processeur de la passerelle domestique.

Par ailleurs, le programme d'ordinateur selon l'invention peut utiliser n'importe quel langage de programmation, et être sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une mémoire de type ROM (Read Only Memory), par exemple un CD ROM ou une ROM de circuit microélectronique, ou encore un moyen d'enregistrement amovible tel qu'une clef USB ou un moyen d'enregistrement magnétique, tel qu'un disque dur. D'autre part, un programme ou module logiciel selon l'invention peut être en particulier téléchargé sur un réseau de type Internet, par exemple via un serveur ou un ensemble de serveurs dédiés. Les avantages procurés par un programme d'ordinateur, tel que brièvement défini plus haut, sont identiques ou contribuent à ceux mentionnés plus haut en relation avec le procédé de contrôle de la restitution par un module décodeur TV d'un flux média, procédé mis en oeuvre par des moyens informatiques incluant une passerelle domestique connectée au décodeur TV, et ne seront donc pas rappelés ici.

### DESCRIPTION DES FIGURES

FIG. 1 représente une passerelle domestique permettant la mise en oeuvre du procédé conformément à un mode de réalisation de l'invention,
FIG. 2A et 2B sont des représentations illustratives de systèmes conformes à deux modes de réalisation de l'invention,
FIG. 3 est un organigramme illustrant la mise en oeuvre de l'invention selon un mode de réalisation de l'invention.

### DESCRIPTION DÉTAILLÉE

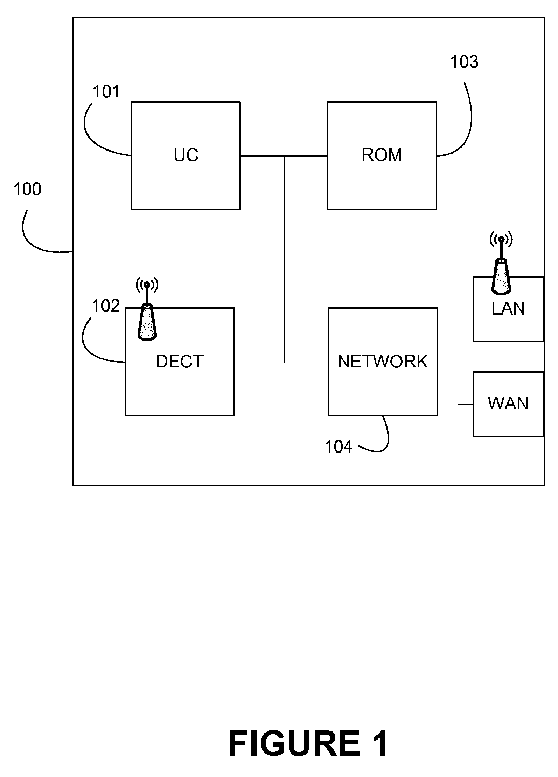

La FIG. 1 représente une passerelle domestique 100 permettant la mise en oeuvre du procédé conformément à un mode de réalisation de l'invention.

Une telle passerelle domestique 100 est souvent aussi appelé « box » et est mise à disposition des utilisateurs ou abonnés par un fournisseur d'accès à Internet. La passerelle domestique est un équipement de terminaison de réseau mis à disposition par le fournisseur d'accès à Internet fournit à ses abonnés. Cette passerelle permet aux abonnés de bénéficier d'un accès à Internet à haut débit (par exemple via des technologies d'accès de type xDSL, fibre optique, câble, 4G, ...), mais aussi de bénéficier par exemple de service type « *triple play* », c'est-à-dire un bouquet de services annexes à l'accès à Internet (téléphonie par IP - Internet Protocol - et télévision par IP), et de fonctionnalités supplémentaires à un modem classique (routeur ou switch, connexions des équipements clients par Wi-Fi, service DLNA, etc.). Ainsi, la passerelle domestique sert bien souvent à réceptionner des flux médias, fournit par le fournisseur d'accès à Internet. Ces flux médias correspondent à des services de type télévision par IP (télévision par protocole Internet), mais aussi des services de type VAD (Vidéos A la Demande - VAD ou plus communément VOD - Video On Demand). Ces services peuvent être fournis par le fournisseur d'accès à Internet ou par un autre fournisseur, les flux médias transitant via la passerelle domestique. Les services peuvent aussi être des radios par Internet ou service de musique en « streaming » (tels Deezer™, Spotify™, Qobuz™, ...).

La passerelle domestique 100 décrite ci-après a la particularité de comprendre un module de contrôle téléphonique 102, ici par exemple un contrôleur DECT conforme à la norme CAT-iq (Cordless Advanced Technology-internet and quality). On comprendra que ce module de contrôle téléphonique 102 peut selon les modes de réalisation être déporté hors de la passerelle domestique 100, la passerelle domestique pouvant contrôler le module 102 à distance, par exemple via une connexion IP ou filaire. Ce module DECT 102 permet l'association - ou appairage - de un ou plusieurs combinés téléphoniques, ces combinés étant alors contrôlés par le module DECT 102. Il est alors possible d'émettre et de recevoir des appels téléphoniques à partir de ces combinés téléphoniques. La ligne téléphonique associée au module de contrôle DECT 102 est bien souvent une ligne dite VoIP (Voice over IP) fournie par le fournisseur d'accès à Internet, mais rien n'interdit que la ligne VoIP soit fournie par un autre fournisseur de service, voir qu'une ligne classique dite RTC (Réseau Téléphonique Commutée) soit utilisée si la passerelle domestique est branchée au réseau RTC. Cela peut être particulièrement le cas si le fournisseur d'accès à Internet fournit un accès à Internet via une technologie xDSL.

La passerelle domestique 100 peut comprendre un module unité centrale 101, un module mémoire 103 et un module réseau 104. Ce module réseau 104 offre typiquement une connexion dite WAN (Wide Area network) correspondant à l'accès au réseau du fournisseur d'accès à Internet, et permettant donc un accès à Internet. Le module réseau offre aussi au moins une possibilité de connexion dite LAN (Local Area Network), permettant la connexion des équipements des clients. Cette connexion se fait typiquement soit par Ethernet, soit via un module Wi-Fi intégré au module réseau 104. Parmi les équipements connectés à la passerelle domestique se trouve généralement un décodeur TV, lequel décodeur TV peut recevoir et traiter les flux médias transmis par la passerelle domestique 100. Par traiter les flux médias, il faut comprendre par exemple sélectionner, et éventuellement démultiplexer ou décoder, dans les flux médias les flux médias à restituer à au moins un dispositif connecté au décodeur TV.

Par dispositif connecté au décodeur TV, on comprend typiquement un téléviseur. Mais d'autre dispositifs peuvent être connecté, soit en complément, soit à la place, tels par exemple un vidéoprojecteur, une chaine hi-fi ou une barre de son - c'est-à-dire des enceintes dites actives ou amplifiées. La connexion au décodeur TV des dispositifs peut se faire par tout moyen filaire ou sans fil, comme par exemple un câble à la norme HDMI (High-Definition Multimedia Interface). Ainsi, les flux médias restitués par le décodeur TV sur au moins un dispositif peuvent être restitués sur un ou plusieurs dispositifs selon leur nature. Typiquement, le décodeur TV peut être connecté à un téléviseur et à une barre de son, le téléviseur recevant les composantes audio et vidéo du flux média quand la barre de son ne reçoit que la composante audio.

La connexion entre la passerelle domestique et le décodeur TV se fait généralement via une connexion data IP, soit sur support Ethernet, soit par Wi-Fi, mais une connexion directe entre les deux équipements est possible, en filaire ou via une liaison en Wi-Fi direct par exemple.

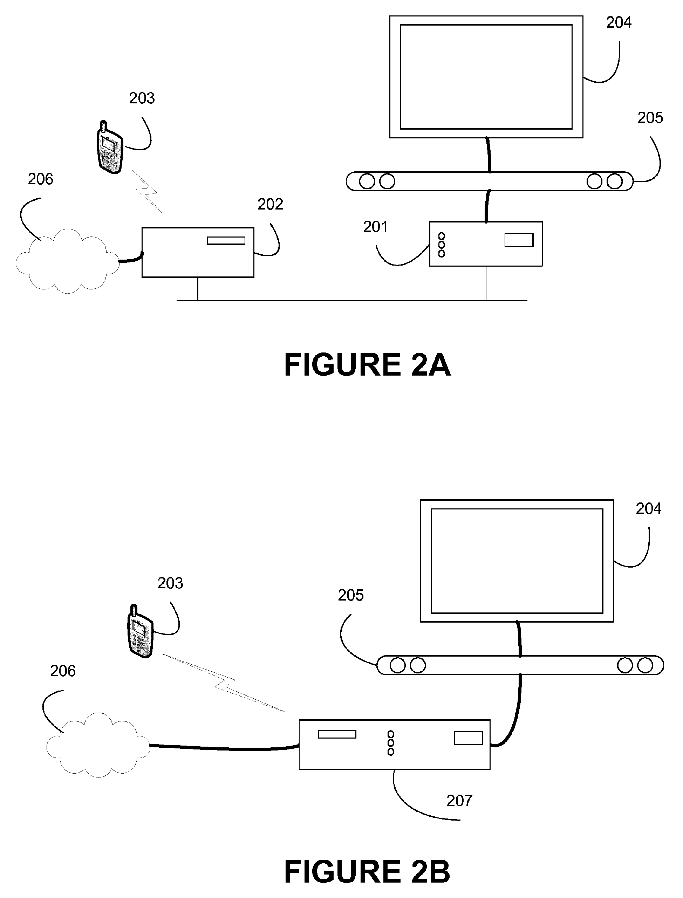

Les FIG. 2A et 2B sont des représentations illustratives de systèmes conformes à deux modes de réalisation de l'invention.

La FIG. 2A représente un système conforme au mode de réalisation déjà illustré avec la FIG. 1, c'est-à-dire d'un système composé d'une passerelle domestique 100, ici représentée par l'équipement 202, et un décodeur TV 201. Les deux équipements passerelle domestique 100, 202 et décodeur TV 201 sont donc deux équipements différents, connecté ici via un réseau Ethernet. La passerelle domestique 100, 202 est ici connecté au réseau Internet 206 via une technologie non représentée, mais qui peut être xDSL, fibre optique, câble, 4G, WiMax ou autre.

Le décodeur TV 201 est connecté à une barre de son 205 et à un téléviseur 204. La connexion du téléviseur 204 au décodeur TV 201 étant illustrée ici comme se faisant via la barre de son 205, qui est pourvue d'une entrée et sortie HDMI. La barre de son 205 peut être utilisée pour restituer la composante son (dit autrement, le son) du flux média restitué par le décodeur TV 201 seule ou en complément du son restitué sur le téléviseur 204.

Dans un autre mode de réalisation non illustré, le téléviseur 204 est connecté au décodeur TV 201 via un câble HDMI (ou péritel) et la barre de son 205 est aussi connecté en direct au décodeur TV 201 via des sortie audio (par exemple de type RCA/Cinch).

Un combiné téléphonique 203 est représenté, lequel est connecté - typiquement via une technologie sans fil DECT - à la passerelle domestique 100, 202, plus précisément au module DECT 102. Ce combiné téléphonique 203 est généralement posé dans un support qui sert à la recharger. Suivant les cas, ce combiné téléphoniques 203 peut être situé dans la même pièce que le téléviseur 204 et la barre de son 205. Ce combiné téléphonique correspond généralement à un combiné téléphonique ou équipement dit fixe, pour un usage domestique.

Selon un mode alternatif de réalisation de la présente invention, le combiné téléphonique 203 correspond à un équipement électronique, par exemple un équipement mobile de type tablette ou smartphone, sur lequel est installé et exécuté une application. Dans ce cas, le combiné téléphonique 203 peut se connecter à la passerelle domestique 100, 202 via par exemple une technologie Wi-Fi ou Bluetooth, le module DECT 102 pouvant ne pas être utilisé. Une telle application peut par exemple être téléchargée sur un serveur d'application tel Google Play™. Cela permet de transformer une tablette ou un téléphone mobile de type GSM/UMTS en téléphone VoIP utilisant la ligne téléphonique mis à disposition via la passerelle domestique 100, 202.

La FIG. 2B représente un système conforme à un mode de réalisation alternatif, ou les fonctionnalités de la passerelle domestique 100 et du décodeur TV 201 sont intégrées dans un même équipement 207. Ce qui a été dit sur le combiné téléphonique 203, la barre de son 205, la connexion au réseau Internet 206 et le téléviseur 204 lors de la description de la FIG. 1 A reste valable dans le système illustré en FIG. 2B.

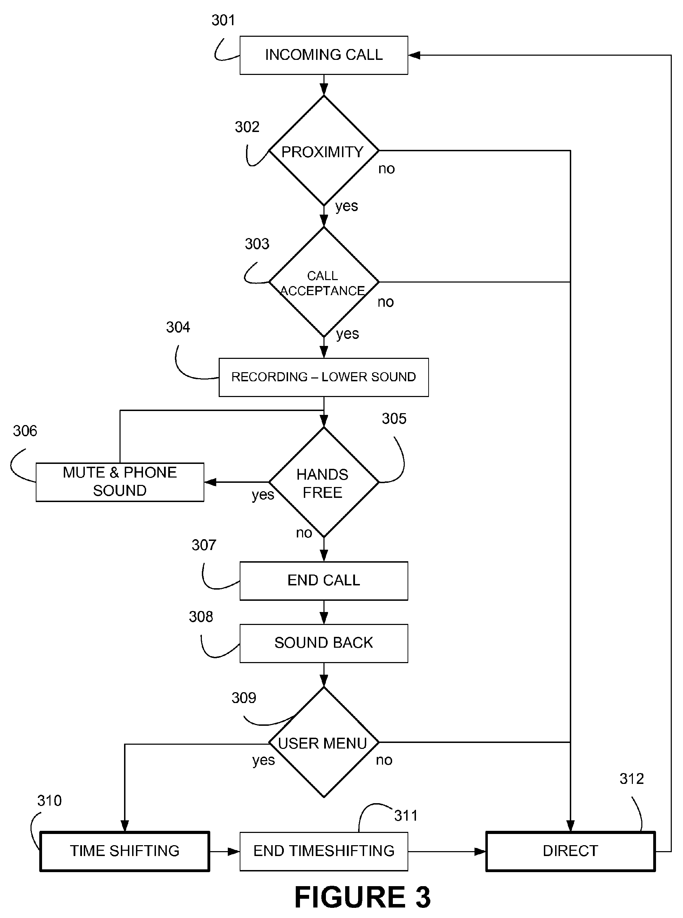

FIG. 3 est un organigramme illustrant la mise en oeuvre d'un procédé de contrôle de la restitution par un module décodeur TV 201 d'un flux média sur au moins un dispositif 204, 205 connecté au décodeur TV 201 , mis en oeuvre par des moyens informatiques incluant une passerelle domestique 202 connectée au décodeur TV 201 et comprenant un module de contrôle téléphonique 102, lequel module de contrôle téléphonique contrôlant au moins un combiné téléphonique 203, selon un mode de réalisation de l'invention.

Le système dans lequel le procédé décrit ci-après est mis en oeuvre est par exemple le système décrit dans la FIG. 2A, comprenant une passerelle domestique 100, 202, connectée à un combiné téléphonique 203, et un décodeur TV 201, le décodeur TV 201 étant connecté à un téléviseur 204 et à une barre de son 205.

La situation de départ - correspondant à l'étape 312 - est celle de un ou plusieurs utilisateurs regardant un contenu ou programme via le décodeur TV 201. Dit autrement, les utilisateurs ont sélectionné via le décodeur TV 201 un flux média, correspondant au contenu, qui est restitué sur le téléviseur 204 pour sa composante vidéo, et sur la barre de son 205 pour sa composante audio. Le flux média correspondant par exemple à un programme de télévision par IP ou à un contenu de VOD et étant transmis depuis le réseau du FAI via la passerelle domestique 100, 202 au décodeur TV 201. Ce flux média comprend donc une composante audio et une composante audio. Le même procédé est applicable à un flux média comprenant une unique composante audio ou vidéo, comme par exemple une radio diffusé par Internet. Il est à noter que le flux média peut provenir de toute autre source que le réseau du FAI et ne doit pas obligatoirement transiter via la passerelle domestique 100. Le même procédé est applicable avec tout flux média reçu par le décodeur TV 201 et restitué sur au moins un dispositif.

Dans une première étape 301, la passerelle domestique 100, 202 détecte l'arrivé d'un appel téléphonique entrant. Cet appel téléphonique est plus précisément reçu par le module DECT 102 connecté au combiné téléphonique 203. Selon le mode de réalisation, l'appel téléphonique peut être présenté de suite au combiné téléphonique 203, ou un certain temps peut être attendu afin de réaliser dans de meilleurs conditions l'étape 302 de détection de proximité. Par certain temps, on comprend quelques secondes. Par présentation de l'appel, on comprend par exemple les actions de faire sonner le combiné téléphonique 203 afin de signaler aux utilisateurs l'appel entrant.

Dans une étape 302, la passerelle domestique 100, 202 détermine une proximité entre le combiné téléphonique 203 et un dispositif 204, 205 connecté au décodeur TV 201. La détermination de la proximité entre le combiné téléphonique 203 et le dispositif 204, 205 connecté au décodeur TV 201 comprend les étapes de réception d'un premier signal audio enregistré par un microphone du combiné téléphonique 203, de réception d'un second signal audio, le second signal audio correspondant à un signal audio associé au flux media restitué sur au moins un dispositif 204, 205 et de détermination d'une correspondance entre le premier et le second signal audio, la correspondance indiquant la proximité entre le combiné téléphonique 203 et au moins un dispositif 204, 205.

Dit autrement, et selon un mode de réalisation, la passerelle domestique 100, 202 active le microphone du combiné téléphonique 203 via le module DECT 102 et enregistre un premier signal audio. Ce signal audio correspond donc au bruit ambiant aux alentours du combiné téléphonique 203. Le principe est donc de comparer ce bruit ambiant avec la composante audio du flux média diffusé, c'est-à-dire restitué par le décodeur TV 201 via par exemple la barre de son 205 (ou le téléviseur 204 si la barre de son n'est pas utilisée). Pour cela, la passerelle domestique 100, 202 peut envoyer une requête au décodeur TV 201 d'envoi d'un second signal audio, le second signal audio correspondant à un signal audio associé au flux media, soit sa composante audio, restitué sur au moins un dispositif et recevoir en retour en réponse à la requête au moins un deuxième message comprenant le second signal audio. Ainsi, la passerelle domestique 100, 202 dispose d'un signal audio correspondant à la composante audio du flux média restitué, dit autrement, du son du programme diffusé. La passerelle domestique 100, 202 peut ensuite déterminer une correspondance entre le premier signal audio et le deuxième signal audio, c'est-à-dire entre le bruit ambiant enregistré par le microphone du combiné téléphonique 203 et le son du programme diffusé par le décodeur TV 201 via soit le téléviseur 204, soit la barre de son 205. Partant du principe que si le combiné téléphonique 203 est à proximité du téléviseur 204 ou de la barre de son 205, selon le dispositif utilisé pour la restitution du son du programme diffusé, alors ce son sera parti intégrante du bruit ambiant enregistré par le microphone du combiné téléphonique 203. On comprend alors que s'il y a correspondance, cela indique que le combiné téléphonique est à proximité téléviseur 204 ou de la barre de son 205, ou que, plus globalement, le combiné téléphonique est situé très probablement dans la même pièce que les utilisateurs regardant le contenu diffusé par le décodeur TV 201. Les signaux audio peuvent correspondre à quelques secondes respectivement de bruit ambiant enregistré ou de composante son du flux média. Selon un mode de réalisation complémentaire, le premier ou le second signal audio est un flux audio. Avantageusement, le microphone du combiné téléphonique 203, contrôlé par le module DECT 102, peut enregistrer en continu le bruit ambiant. Ainsi, de façon générale, la passerelle domestique 100, 202, peut déterminer la proximité à tout moment par exemple par l'envoi d'une requête au décodeur TV 201 pour disposer d'un second signal audio - soit d'un échantillon, soit d'un flux audio continu - correspondant à la composante audio du flux média restitué sur le téléviseur 204 ou la barre de son 205, et comparaison entre les deux signaux audio. Par détermination d'une correspondance ou comparaison entre les deux signaux audio, on entend toute méthode permettant de déterminer que deux signaux audio sont similaires. Cela peut être par exemple une méthode reposant sur le calcul de signature audio des deux signaux et comparaison des deux signatures. Par signature audio, on entend un résultat obtenu par application d'un procédé de filtrage ou traitement d'un signal audio.

Ainsi, s'il n'y a pas de correspondance - ou pas suffisamment de correspondance - entre les deux signaux audio, la passerelle domestique 100, 202 détermine qu'il n'y a pas proximité et l'étape suivante est l'étape 312. Nous sommes a priori dans une situation où le combiné téléphonique n'est pas à proximité des utilisateurs regardant le téléviseur 204 ou écoutant la barre de son 205 (ou les deux). Dans ce cas, aucune action particulière n'est à prévoir, le combiné téléphonique sonne normalement et les utilisateurs continuent de bénéficier du contenu diffusé. Si l'appel est pris, hypothèse est faite que la conversation téléphonique aura lieu suffisamment loin du téléviseur 204 ou de la barre de son 205 pour que la conversation ne soit pas perturbé par le son diffusé.

Dans le cas contraire, s'il y a correspondance entre les signaux audio, et donc détermination de la proximité, hypothèse est faite que nous sommes dans une situation où un appel pris sur le combiné téléphonique 203, et donc la conversation téléphonique qui suivra, sera perturbé par le contenu diffusé, plus précisément par le son diffusé.

Ainsi, dans une étape 303, le système réagira différemment selon que l'appel entrant soit pris ou non. Si l'appel n'est pas pris, alors, comme dans le cas où la proximité n'est pas déterminée, aucune action particulière n'est prise, les utilisateurs continuant à bénéficier de leur programme normalement comme vu précédemment selon l'étape 312. Si l'appel téléphonique est pris, des actions particulières seront effectuées par la passerelle domestique 100, 202 dans une étape 304.

Selon un mode de réalisation alternatif, la prise d'appel n'est pas considérée, c'est-à-dire que le test correspondant à l'étape 303, correspondant à la détection de la prise de l'appel téléphonique, n'est pas effectué. Dit autrement, en situation de réception d'un appel téléphonique par le module DECT 102, et en cas de proximité, les actions correspondant à l'étape 304 sont effectuées.

Selon l'étape 304, en cas de proximité et sur prise ou réception - selon le mode de réalisation - d'un appel téléphonique par un utilisateur, la passerelle domestique 100, 202 envoie un premier message au décodeur TV 201, le premier message comprenant une instruction d'enregistrement du flux media restitué. Ainsi, la passerelle domestique 100, 202 envoie une instruction de déclenchement de l'enregistrement du contenu diffusé au décodeur TV 201. Selon un mode de réalisation complémentaire, le premier message comprend aussi une instruction de contrôle du volume sonore du flux média restitué sur au moins un dispositif connecté. Dit autrement, en plus de déclencher l'enregistrement du flux média par le décodeur TV 201, la passerelle domestique 100, 202 peut aussi envoyer une instruction de contrôle du son au décodeur TV 201, plus avantageusement une instruction de baisse du son restitué afin de diminuer la perturbation ; soit pour mieux entendre le combiné téléphonique 203 sonner, soit pour que l'utilisateur qui a décroché entende mieux son correspondant, c'est-à-dire l'appelant.

Pendant la durée de l'appel, et selon un mode de réalisation complémentaire de l'invention, l'utilisateur peut souhaiter passer en mode « main libre ». Cela se fait habituellement en pressant une touche dédiée ou non du combiné téléphonique 203. Si l'utilisateur active le mode main libre, alors la passerelle domestique 100, 202 envoie une instruction au décodeur TV de couper le son du flux média restitué. Dans un même temps, le flux audio correspondant au flux audio provenant de l'appelant est envoyé pour diffusion par la passerelle domestique 100, 202 vers le décodeur TV 201. Le décodeur TV 201 restitue donc à la place de la composante audio du flux media le signal audio provenant de l'appelant. Cela permet de bénéficier de la fonction « main libre » en utilisant les haut-parleurs du téléviseur 204 ou de la barre de son 205.

Dans une étape 307, lorsque l'utilisateur ou l'appelant met fin à l'appel, ou plus généralement et pour tout autre raison, lorsque l'appel téléphonique prend fin, la passerelle domestique 100, 202 envoi un troisième message au décodeur TV 201, le troisième message comprenant une instruction de présentation d'une interface utilisateur prédéfinie sur un dispositif de restitution, l'interface utilisateur comprenant une première option, sélectionnable par un utilisateur, d'arrêt d'enregistrement du flux média et une deuxième option, sélectionnable par un utilisateur, de restitution du flux média enregistré, l'enregistrement du flux média continuant. Dit autrement, à la fin de l'appel, la passerelle domestique 100, 202 envoie instruction au décodeur TV 201 d'afficher un menu sur le téléviseur 204 (ou tout autre dispositif pouvant afficher une interface graphique du décodeur TV 201), lequel menu offre le choix à l'utilisateur entre une première option de continuer à regarder (ou écouter s'il s'agit d'un flux uniquement audio) en direct le flux média - l'enregistrement étant alors arrêté - et une deuxième option de reprendre le visionnage (ou l'écoute) du flux média au moment de la réception ou de la prise de l'appel téléphonique, c'est-à-dire du déclenchement de l'enregistrement comme vu à l'étape 304. Dans ce cas, l'enregistrement du flux media est maintenu, et le décodeur TV 201 restituant le flux média enregistré. Dit autrement, dans la deuxième option, un visionnage ou l'écoute en « *time shifting » -* en « décalage temporel », « différé » ou « contrôle du direct » - du flux media est lancé, les utilisateurs visionnant ou écoutant un flux média décalé du temps de la conversation téléphonique.

Dans un mode de réalisation complémentaire, illustré par l'étape 308, le quatrième message envoyé par la passerelle domestique 100, 202 comprend une instruction de contrôle du volume sonore du flux média restitué sur le dispositif connecté. Dit autrement, la passerelle domestique 100, 202, à la fin de l'appel téléphonique peut demander au décodeur TV 201 de remettre le son au niveau auquel il était avant qu'il ne soit automatiquement baissé dans l'étape 304. Cette dernière option peut être désactivée si le décodeur TV 201 a reçu depuis l'étape 304 une commande utilisateur lui demandant déjà de remonter le son, c'est-à-dire si un utilisateur a déjà remonter le son durant l'appel téléphonique. Selon un mode de réalisation complémentaire de l'invention, si le son n'a été que baissé durant l'appel, alors il sera remis à son niveau d'avant l'appel à la fin de l'appel téléphonique. Alternativement, le son est remis à son niveau d'origine uniquement s'il n'a pas été modifié durant l'appel.

Selon le choix fait par l'utilisateur, représenté par l'étape 309, le décodeur TV 201 passe donc en mode « normal » - étape 312 - ou en mode « *time shifting » -* étape 310.

Ainsi, ce procédé offre à l'utilisateur qui a répondu à l'appel téléphonique, s'il le souhaite, la possibilité de reprendre le programme juste au moment où il a été dérangé par l'appel (soit la réception, soit la prise d'appel), tout en réduisant la gêne causé par le son du programme diffusé. De la même façon, les utilisateurs qui regardent un programme avec l'utilisateur qui prend l'appel téléphonique peuvent malgré tout continuer à bénéficier du programme puisque que celui-ci n'est pas interrompu ni mis sur pause, mais juste enregistré pendant le temps de l'appel téléphonique. A la fin de l'appel, le choix est donné entre continuer à regarder « en direct » le flux média, ou reprendre en mode « *time shifting* ». De la même façon, le son qui a automatiquement été baissé lors de la réception ou prise d'appel est remis à son niveau précédent - avant réception ou prise d'appel -, ou à un niveau prédéterminé.

Lorsqu'il est mis fin au « *time shifting* », dans une étape 311, le système reprend son état normal correspondant à l'état 312.

Dans la description ci-dessus, le procédé de contrôle est mis en oeuvre par une passerelle domestique contrôlant un combiné téléphonique comme un équipement (ou terminal) mobile ou fixe. Dans ce mode de réalisation, la passerelle domestique peut être vue comme un équipement électronique distinct du combiné téléphonique.

De manière plus générale, le procédé de contrôle peut également être mis en oeuvre par un équipement électronique comme une tablette ou un smartphone contrôlant le combiné téléphonique.

Ceci peut être le cas notamment lorsque l'équipement électronique est une tablette, comprenant un module de contrôle téléphonique comme une application de voix sur IP comme Skype™, Viber™ ou Whatsapp™, permettant de piloter un combiné téléphonique comme un ou plusieurs smartphones. Dans ce mode de réalisation supplémentaire, l'équipement électronique, ici la tablette, joue le même rôle que la passerelle domestique, c'est-à-dire que en situation de réception d'un appel téléphonique par l'application de voix sur IP, il :
- détermine une proximité entre le combiné téléphonique, ici le smartphone, et un dispositif connecté au décodeur TV, et,
- en cas de proximité, envoie un premier message au décodeur TV, le premier message comprenant une instruction d'enregistrement du flux media restitué. Dans ce mode de réalisation, la tablette peut être connecté au décodeur TV via soit un réseau local de type WiFi ou via un réseau cellulaire de type 4G ou similaire.

Dans un mode de réalisation supplémentaire, l'équipement électronique mettant en oeuvre le procédé de contrôle peut comprendre ou être confondu avec l'équipement mobile. C'est par exemple le cas d'un smartphone ou équipement mobile jouant à la fois le rôle de la passerelle domestique dans le présent procédé et celui du combiné téléphonique. L'équipement électronique, ici le smartphone, en situation de réception d'un appel téléphonique par l'application de voix sur IP :
- détermine une proximité entre le combiné téléphonique, c'est-à-dire, et un dispositif connecté au décodeur TV, c'est-à-dire sa propre proximité au décodeur TV,
- en cas de proximité, envoie un premier message au décodeur TV, le premier message comprenant une instruction d'enregistrement du flux media restitué.

## Revendications

1. Un procédé de contrôle de la restitution par un module décodeur TV d'un flux média sur au moins un dispositif connecté au décodeur TV, mis en oeuvre par des moyens informatiques incluant un équipement électronique connecté au décodeur TV et comprenant un module de contrôle téléphonique, lequel module de contrôle téléphonique contrôlant au moins un combiné téléphonique, dans lequel l'équipement électronique, en situation de réception d'un appel téléphonique par le module de contrôle téléphonique :
- détermine une proximité entre le combiné téléphonique et un dispositif connecté au décodeur TV, et,
- en cas de proximité, envoie un premier message au décodeur TV, le premier message comprenant une instruction d'enregistrement du flux media restitué.

2. Le procédé selon la revendication précédente, l'équipement électronique étant une passerelle domestique contrôlant avec le module de contrôle téléphonique le combiné téléphonique distinct dudit l'équipement électronique.

3. Le procédé selon la revendication 1, l'équipement électronique comprenant le combiné téléphonique.

4. Le procédé selon une des revendications précédentes, le premier message étant envoyé sur prise de l'appel téléphonique par un utilisateur.

5. Le procédé selon une des revendications précédentes, le premier message comprenant une instruction de contrôle du volume sonore du flux média restitué sur au moins un dispositif connecté.

6. Le procédé selon une des revendications précédentes, la détermination de la proximité entre le combiné téléphonique et un dispositif connecté au décodeur TV comprenant les étapes de :
- réception d'un premier signal audio enregistré par un microphone du combiné téléphonique,
- réception d'un second signal audio, le second signal audio correspondant à un signal audio associé au flux media restitué sur au moins un dispositif,
- détermination d'une correspondance entre le premier et le second signal audio, la correspondance indiquant la proximité.

7. Le procédé selon la revendication précédente, le premier ou second signal audio étant un flux audio.

8. Le procédé selon la revendication 5 ou 6, la réception du second signal audio comprenant les étapes suivantes :
- envoi d'une requête au décodeur TV d'envoi d'un second signal audio, le second signal audio correspondant à un signal audio associé au flux media restitué sur au moins un dispositif,
- réception en réponse à la requête d'au moins un deuxième message comprenant le second signal audio.

9. Le procédé selon une des revendications précédentes, le procédé comprenant de plus l'étape ultérieure, lorsque l'appel téléphonique prend fin :
- envoi d'un troisième message au décodeur TV, le troisième message comprenant une instruction de présentation d'une interface utilisateur prédéfinie sur un dispositif de restitution, l'interface utilisateur comprenant :
o une première option, sélectionnable par un utilisateur, d'arrêt d'enregistrement du flux média,
o une deuxième option, sélectionnable par un utilisateur, de restitution du flux média enregistré, l'enregistrement du flux média continuant.

10. Le procédé selon la revendication précédente, le quatrième message comprenant une instruction de contrôle du volume sonore du flux média restitué sur le dispositif connecté.

11. Un équipement électronique connecté à un décodeur TV, le décodeur TV restituant un flux média sur au moins un dispositif qui lui est connecté, l'équipement électronique comprenant un module de contrôle téléphonique, lequel module de contrôle téléphonique contrôlant au moins un combiné téléphonique, lequel équipement électronique est adapté pour :
- déterminer une proximité entre le combiné téléphonique et un dispositif connecté au décodeur TV,
- contrôler la restitution et l'enregistrement du flux média par le décodeur TV en fonction de la proximité déterminée.

12. Programme d'ordinateur pour la mise en oeuvre des étapes de la méthode selon une des revendications 1 à 10 lorsque le programme est exécuté par au moins un processeur d'une passerelle domestique.
